(19) Europäisches Patentamt
European Patent Office
Office européen des brevets

(11) Veröffentlichungsnummer: **0 163 108**
**B1**

(12) **EUROPÄISCHE PATENTSCHRIFT**

(45) Veröffentlichungstag der Patentschrift: **03.06.87**

(21) Anmeldenummer: **85104840.5**

(22) Anmeldetag: **22.04.85**

(51) Int. Cl.[4]: **C 02 F 1/56,** C 08 F 220/34, C 08 F 220/60 // (C08F220/34, 220:04, 220:52, 220:10, 212:08), (C08F220/60, 220:04, 220:52, 220:16, 212:08)

(54) **Hydrophobierte Polymerampholyte für die Lackkoagulation.**

(30) Priorität: **30.04.84 DE 3416119**

(43) Veröffentlichungstag der Anmeldung: **04.12.85 Patentblatt 85/49**

(45) Bekanntmachung des Hinweises auf die Patenterteilung: **03.06.87 Patentblatt 87/23**

(84) Benannte Vertragsstaaten: **DE**

(56) Entgegenhaltungen:
**DE - A - 2 749 295**
**US - A - 3 515 575**
**US - A - 3 634 366**
**US - A - 3 753 901**
**US - A - 3 950 296**
**US - A - 4 115 339**

(73) Patentinhaber: **Henkel Kommanditgesellschaft auf Aktien, Postfach 1100 Henkelstrasse 67, D-4000 Düsseldorf-Holthausen (DE)**

(72) Erfinder: **Schieferstein, Ludwig, Dr., Posener Strasse 70, D-5600 Wuppertal 2 (DE)**
Erfinder: **Geke, Jürgen, Dr., Stoffeler Damm 108, D-4000 Düsseldorf 1 (DE)**
Erfinder: **Rehm, Hans-Jörg, Haydnstrasse 6, D-4010 Hilden (DE)**

**EP 0 163 108 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft hydrophobierte Polymerampholyte als Mittel zur Koagulierung und Entklebung von Lacken, Wachsen und Beschichtungsmitteln.

Bei der Aufbringung von Lacken, Wachsen oder ähnlichen, nicht wasserlösliche organische Substanzen enthaltenden Beschichtungsmaterialien, z.B. in der Automobilindustrie, gelingt es nicht, die Materialien restlos auf die zu beschichtenden Teile aufzubringen. Speziell bei der Lackierung von Kraftfahrzeugen fällt in den Lackspritzkabinen sogenannter «Overspray» an, der mittels Wasser, das an der Innenwand der Lackspritzkabinen herunterrieselt und durch Umlaufpumpen in Betrieb gehalten wird, aus den Anlagen entfernt und in ein sogenanntes Beruhigungsbecken gespült wird. Um einerseits die Funktion der wasserführenden Leitungs-, Düsen- und Berieselungssysteme durch z.B. klebende Lackpartikel nicht zu stören und andererseits das umlaufende Wasser von den aufgenommenen Inhaltsstoffen zu entsorgen, müssen zur Koagulierung der genannten Stoffe dem Wasser Chemikalien zugegeben werden. Dabei sollte die Entklebung der verspritzten und vom Wasser aufgenommenen Lackpartikel und deren Agglomeration zu einem austragungsfähigen Koagulat in einem Arbeitsgang erfolgen. Ziel der Zugabe von Chemikalien zu den Umlauf- und Berieselungswässern ist es, die beim Lackieren entstehenden Lackverluste aufzufangen und dem Lack die Klebekraft zu nehmen, damit verbleibende Lackreste den Arbeitsprozess nicht stören und keine Verstopfungen im Rohrleitungs- oder Pumpensystem entstehen (K.H. Adams, J. Oberflächentechnik *1980*, 2, S. 70 ff.).

Zur Koagulierung herkömmlicher, vor allem in der Automobilindustrie verwendeter Lacke steht eine Reihe neutraler und alkalischer Produkte zur Verfügung. Um Koagulierung, d.h. Entklebung der Lackpartikel und deren Agglomeration zu einem austragungsfähigen Koagulat, zu erreichen, wurden dem umlaufenden Wasser bisher alkalische pulverförmige und alkalische flüssige Produkte sowie pulverförmige neutrale Produkte zugesetzt.

So werden in der GB-A 1 512 022 flockulierende, d.h. den Zusammenschluss von Teilchen unter Einwirkung intermolekular brückenbildender Makromoleküle bewirkende Agentien beschrieben. Diese setzen sich zusammen aus als Klärmittel wirkenden anorganischen Metallsalzen wie Eisen (II)chlorid oder Aluminiumsulfat, und organischen kationischen Polymeren wie Polyvinylpyridin oder Polyaminen in wässeriger Lösung.

Zusatzmittel zu Spülflüssigkeiten zur Koagulierung von Lack- und Grundiermitteln werden in der DE-A 1517409 offenbart. Sie enthalten wasserlösliche Alkali- und/oder Erdalkalimetallsalze, schwer wasserlösliche Hydroxide mehrwertiger Metalle, wie Magnesium, Eisen, Aluminium oder Chrom sowie aliphatische oder cycloaliphatische Amine. Lackentklebungs- und Sedimentationsmittel, die aliphatische Carbonsäuren mit 12 oder mehr C-Atomen oder deren Alkali-, Ammonium- oder Alkanolaminsalze sowie schaumdämpfend wirkende Stoffe enthalten, werden in der DE-B 2347068 beschrieben. Wässerige Lösungen zur Entaktivierung von Overspray, die Alkalien und organische Amine bzw. Alkanolamine mit Organylgruppen mit 2 bis 10 C-Atomen enthalten, werden in der DE-A 2006008 beschrieben. Alkanolamine, die zusammen mit Metallsalzen und Polyetherpolyaminen in wässeriger Lösung zur Entklebung von Lackspray-Partikelchen und zur Reinigung der Umlaufwässer in Lackspritzkabinen enthalten sind, werden auch in der US-A 3990986 offenbart.

Wasserlösliche kationische Polymere, die in Pulverform erhältlich sind und als Flockungsmittel Verwendung finden, werden in der DE-A 2749295 beschrieben. Zur Verbesserung des Flockungsverhaltens bei gleichzeitiger Absenkung des Molekulargewichts des Polymeren und damit einhergehender Erhöhung der Löslichkeit des Produktes werden in Pulverform wasserlösliche anorganische Salze zugesetzt, wodurch man ein wasserlösliches kationisches Polymer in Form einer festen Masse erhält.

Die bekannten neutralen und alkalischen Koagulierungsmittel weisen eine Reihe von Nachteilen auf. In dem Masse, in dem die Anforderungen an die Abwässer, die in die Kanalisation abfliessen, immer strenger werden, wird bei den im alkalischen Milieu arbeitenden Verfahren ein nachträglicher Neutralisationsschritt erforderlich. Die meisten als Koagulationsmittel bekannten Mischungen enthalten ausserdem Substanzen, wie z.B. anorganische Anionen (Chlorid, Sulfat), die sich im Umlaufwasser anreichern und korrosiv gegenüber verschiedenen Anlagenteilen wirken. Da aus wassertechnischen Gründen eine Verlängerung der Standzeit der Entsorgungsbäder angestrebt wird, ist eine Verwendung sich schnell anreichernder, die Funktionsfähigkeit der Anlage aus verschiedenen Gründen beeinträchtigender Substanzen unerwünscht, da sie zu einem häufigen Badwechsel zwingt.

Die Verwendung pulverförmiger Koagulierungsmittel hat den wesentlichen Nachteil, dass sie für den Koagulierungsvorgang erst in Wasser suspendiert werden müssen, was nicht allein Probleme in der Dosierung der Mittel mit sich bringt. Vielmehr beeinträchtigt der für ein gutes Suspendieren der Pulverprodukte notwendige Rührvorgang die erwünschte und erfindungswesentliche Flockenbildung, was die Wirkung der Koagulierungsmittel verschlechtert und den Einsatz höherer Konzentrationen in den Entsorgungsbädern erforderlich macht. Zudem ist der Einsatz von Koagulierungsmitteln in Pulverform überall dort nicht möglich, wo eine Staubbildung peinlich vermieden werden muss.

Dem Einsatz einer aus wasserlöslichem Pulverprodukt separat bereiteten Vorlösung steht die mit dem hohen Molekulargewicht der nach dem Stand der Technik zum Einsatz kommenden polymeren Festprodukte als Mischungsbestandteil verbundene hohe Viskosität entgegen, die eine indiskutabel hohe Vorverdünnung erforderlich macht.

Ausserdem führen heute übliche Einsatzkonzentrationen polymerhaltiger Produkte für den Neutralbereich (1 ppm und höher) zu störender Schaumbildung, der durch zusätzliche Massnahmen, wie z.B. die Verwendung von die Schaumbildung hemmenden Mitteln, begegnet werden muss.

Diesen Nachteilen versucht die vorliegende Erfindung abzuhelfen, deren Aufgabe es ist, neutral reagierende, hochkonzentrierte, flüssig konfektionierte und salzfreie Koaguliermittel zur Verfügung zu stellen, die bereits in niedrigen Einsatzkonzentrationen wirksam sind.

Es wurde nämlich gefunden, dass Copolymere aus Säuregruppen tragenden Monomeren, Aminogruppen tragenden Monomeren sowie hydrophobierend wirkenden Monomeren in der Lage sind, verschiedene Lacke in neutralem Berieselungswasser schon bei sehr niedrigen Einsatzkonzentrationen zu koagulieren.

Die Erfindung betrifft daher Mittel zur Koagulierung von Lacken, Wachsen und Beschichtungsmitteln, die wasserlösliche Copolymere aus Säuregruppen tragenden (S-) Monomeren der allgemeinen Formel I

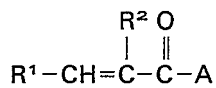

(I)

in der $R^1$ und $R^2$ gleich oder verschieden sein können und für Wasserstoff oder lineare oder verzweigte Alkylreste mit 1 bis 3 C-Atomen stehen und A ein Hydroxy- oder Iminoalkansulfonsäure-Rest sein kann, in dem die Alkylen-Gruppe verzweigt oder unverzweigt sein und 1 bis 6 C-Atome tragen kann, und Aminogruppen tragenden (A-) Monomeren der allgemeinen Formel II

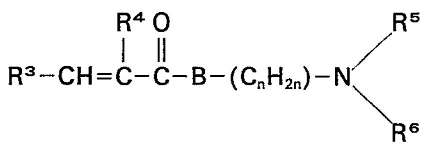

(II)

in der $R^3$ und $R^4$ gleich oder verschieden sein können und für Wasserstoff oder lineare oder verzweigte Alkylreste mit 1 bis 3 C-Atomen stehen, B Sauerstoff oder eine $-NH-$ Gruppe ist, $R^5$ und $R^6$ gleich oder verschieden sein können und für Alkylreste mit 1 oder 2 C-Atomen stehen, der durch $(C_nH_{2n})$ gekennzeichnete Alkylenrest linear oder verzweigt sein kann und n eine ganze Zahl von 1 bis 6 ist, und hydrophobierend wirkenden (H-) Monomeren der allgemeinen Formel III

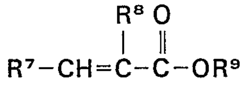

(III)

in der $R^7$ und $R^8$ gleich oder verschieden sein können und für Wasserstoff oder lineare oder verzweigte Alkylreste mit 1 bis 3 C-Atomen stehen und $R^9$ ein linearer oder verzweigter Alkylrest mit 1 bis 6 C-Atomen ist, oder Styrol enthalten, wobei das Molverhältnis der S-Monomeren und A-Monomeren zueinander im Bereich von 2:1 bis 1:2 liegt und das Molverhältnis der H-Monomeren zur Summe der beiden anderen Monomerengruppen grösser oder gleich 1:20 ist.

Die Monomerbausteine der allgemeinen Formeln (I), (II) und (III) enthaltenden Copolymere lassen sich als hydrophobierte Polymerampholyte bezeichnen.

Als Säuregruppen tragende Monomere, weiterhin bezeichnet als S-Monomere, sind insbesondere solche Monomere geeignet, die neben ihrer polymerisierbaren Doppelbindung Säuregruppen wie Carboxylgruppen und Sulfonsäuregruppen enthalten und ein Molekulargewicht unter 500 D aufweisen. Als bevorzugte Verbindungen im Rahmen der vorliegenden Erfindung werden Acrylsäure, Methacrylsäure und Acrylamidomethylpropansulfonsäure verwendet.

Als die Aminogruppen tragenden Monomerbausteine, weiterhin als A-Monomere bezeichnet, sind insbesondere solche Derivate der Acrylsäure bzw. Methacrylsäure mit Molekulargewichten kleiner als 500 D geeignet, die an der Carboxylgruppe Amino-substituierte Alkylenreste tragen, also durch Veresterung von Acrylsäure oder Methacrylsäure mit α,ω-Aminoalkoholen entstanden sind. Es sind jedoch auch substituierte Acrylsäureamide oder Methacrylsäureamide verwendbar. Bevorzugt werden Dimethylaminoethylmethacrylat, Dimethylaminoneopentylacrylat und Dimethylaminopropylmethacrylamid als A-Monomere eingesetzt. Die endständigen Aminogruppen können auch in quaternisierter Form vorliegen.

Das Mol-Verhältnis von S-Monomeren und A-Monomeren in der Polymerisationsmischung beträgt 2:1 bis 1:2. Für Koagulierungsmittel besonders vorteilhafte hydrophobierte Polymerampholyte werden erhalten, wenn das Verhältnis S:A auf einen Bereich zwischen 1,2:1 und 1:1,2, besonders vorteilhaft auf ein Verhältnis von 1:1 eingestellt wird.

Als hydrophobierend wirkende Monomere, weiterhin als H-Monomere bezeichnet, sind insbesondere solche eine polymerisierbare Doppelbindung enthaltende Moleküle geeignet, deren Polarität durch Einführung unpolarer Gruppen reduziert wurde. Bevorzugt werden Ester der Acryl- und Methacrylsäure mit 1 bis 6 C-Atome tragenden Alkoholen, deren Molekulargewicht kleiner als 500 D ist, oder Styrol verwendet.

Besonders bevorzugt als H-Monomere in den für Koagulierungsmittel geeigneten hydrophobierten Polymerampholyten sind Acrylsäure- oder Methacrylsäure-Ester von Alkoholen mit 1 bis 4 C-Atomen.

Das Molverhältnis der H-Monomeren zur Summe der S-Monomeren und A-Monomeren in der Polymermischung [H:(A + S)] wird auf einen Betrag grösser oder gleich 1:20, bevorzugterweise grösser oder gleich 1:10, eingestellt. Die Obergrenze des Verhältnisses H:(A + S) ist dadurch gegeben, dass das resultierende Polymere nicht mehr wasserlöslich ist. Sie liegt bei ca. 1:1.

Mischungen aus den genannten Copolymeren in den angegebenen molaren Verhältnissen werden nach an sich bekannten Methoden, gegebenenfalls unter Verwendung einer als Starter wirkenden Verbindung, in einem Lösungsmittel oder Lösungsmittelgemisch bei Raumtemperatur polymerisiert, wobei der Polymerisationsvorgang gegebenenfalls unter Schutzgasatmosphäre, z.B. unter Stickstoffatmosphäre, durchgeführt wird. Es resultieren klare, leicht viskose, in den meisten Fällen farblose Polymerlösungen, die als Konzentrate lagerfähig sind und eingesetzt werden.

Zur Prüfung der Koagulationseigenschaften der hydrophobierten Polymerampholyte werden Lösungen mit Polymergehalten im Bereich von 0,01 bis 100 ppm, bevorzugt von 0,1 bis 20 ppm, in Wasser, vorzugsweise in neutralem Leitungswasser, hergestellt, denen gewisse Mengen der zu koagulierenden Lacke unter Bewegung der Polymerlösungen zugesetzt werden. Die Tests auf Koagulationsfähigkeit der Polymerampholyte lassen sich sowohl in einem Laboratoriumsversuch simulieren als auch in Technikumsanlagen, z.B. in Anlagen, deren umlaufende Flüssigkeitsmenge im Bereich von 1 $m^3$ liegt, testen.

Wie sich im Verlauf der Experimente zeigt und den Beispielen im einzelnen zu entnehmen ist, weisen die erfindungsgemäss hydrophobierte Polymerampholyte enthaltenden Mittel nicht nur eine ausgeprägte Schaumarmut, sondern auch ausgezeichnete Koagulationseigenschaften selbst dann auf, wenn die Einsatzkonzentration des Wirkstoffs in den Badlösungen auf Werte unter 10 ppm gesenkt wird. Teilweise wurden sogar mit Einsatzkonzentrationen von 0,1 ppm ausgezeichnete Koagulation und Entklebung der Lacke erreicht.

Im Laborversuch, der in einem Becherglas durchgeführt wurde, erwiesen sich Lösungen mit Polymerkonzentrationen von 50 ppm als besonders geeignet.

Die Erfindung wird durch die nachfolgenden Beispiele näher erläutert.

Allgemeine Arbeitsvorschrift:

Die in Tabelle 2 angegebenen Mengen der in Tabelle 1 aufgeführten Monomeren wurden in der vierfachen Menge einer 20%igen wässerigen Isopropanollösung unter Verwendung von 700 ppm Azobis(isobuttersäurenitril) als Radikalstarter bei ca. 70° C polymerisiert. Vor dem Reaktionsstart wurde der pH-Wert der Mischung durch Zusatz einer entsprechenden Menge 30%iger Schwefelsäure bzw. 25%igen Ammoniaks auf einen Wert von 6 bis 7 gebracht.

Nach Polymerisation resultierten klare, mässig bis leicht viskose, in den meisten Fällen farblose Polymerlösungen.

Die Vorgehensweise wird im folgenden am Beispiel 1 der Tabellen näher erläutert.

Herstellvorschrift für das Polymer aus Beispiel 1: In einen 2-l-Kolben werden 95,4 g Dimethylaminoethylmethacrylat (0,61 mol), 60,8 g Methylmethacrylat (0,61 mol), 0,7 g Azodi(isobuttersäurenitril) und 159 g Isopropanol eingewogen. Unter Rühren werden 43,8 g Acrylsäure (0,61 mol) in 635 g Wasser zugesetzt. Durch äussere Kühlung wird dabei eine Erwärmung über 25° C vermieden. Die Mischung wird dann vorsichtig durch Zufügen von ca. 5 g 30%iger Schwefelsäure auf einen pH-Wert von 6,0 gebracht und unter einer Stickstoffatmosphäre 2,5 Stunden bei 65 bis 80° C gerührt. Nach Erkalten erhält man eine farblose, klare, leicht viskose Polymerlösung.

Zur Prüfung der Koagulierungseigenschaften der jeweiligen Polymeren wurden in einem 400-ml-Becherglas Polymerlösungen der aus Tabelle 3 ersichtlichen Konzentration in vorzugsweise neutralem Leitungswasser hergestellt und unter Rühren (Geschwindigkeit 500 $min^{-1}$) mit dem zu koagulierenden Lack versetzt; die Lackkonzentration in der Lösung ist ebenfalls Tabelle 3 zu entnehmen. Nach homogener Verteilung der gesamten Lackmenge in dem die hydrophobierten Polymerampholyte enthaltenden Wasser wurde der Rührer gestoppt, damit sich das Koagulat absetzen konnte. Nach kurzer Absetzzeit (ca. 2 Minuten) resultierten mehr oder weniger klare und farblose, von Lack befreite Lösungen mit einem mehr oder weniger entklebten Lackkoagulat als Bodenkörper.

Die Koagulierungswirkung wurde ausser in Laborversuchen auch in einer Technikumsanlage getestet, deren Badvolumen 1 $m^3$ betrug.

Die Koagulierungseigenschaften der einzelnen Polymere sowie ihre Fähigkeit, den Lack zu entkleben, wurde anhand einer Bewertungsskala («1»: vollständige Entklebung bzw. Koagulation; «2»: befriedigende Entklebung bzw. Koagulation; «3»: schlechte Entklebung bzw. Koagulation) bewertet; die Ergebnisse sind ebenfalls Tabelle 3 zu entnehmen.

*Tabelle 1*
In den Koagulierungsmitteln enthaltene Monomere

| | S Formel I | | | A Formel II | | | | | | H Formel III | | |
|---|---|---|---|---|---|---|---|---|---|---|---|---|
| Bsp. | $R^1$ | $R^2$ | A | $R^3$ | $R^4$ | $R^5$ | $R^6$ | B | n | $R^7$ | $R^8$ | $R^9$ |
| 1 | H | H | OH | H | $CH_3$ | $CH_3$ | $CH_3$ | O | 2 | H | $CH_3$ | $CH_3$ |
| 2 | H | H | OH | H | $CH_3$ | $CH_3$ | $CH_3$ | O | 2 | H | H | $C_2H_5$ |
| 3 | H | H | OH | H | H | $CH_3$ | $CH_3$ | O | 5 | H | H | $C_2H_5$ |
| 4 | H | $CH_3$ | OH | H | $CH_3$ | $CH_3$ | $CH_3$ | NH | 3 | H | $CH_3$ | $CH_3$ |
| 5 | H | H | OH | H | $CH_3$ | $CH_3$ | $CH_3$ | O | 2 | H | H | $C_2H_5$ |
| 6 | H | H | OH | H | $CH_3$ | $CH_3$ | $CH_3$ | O | 2 | H | $CH_3$ | $CH_3$ |
| 7 | H | H | OH | H | $CH_3$ | $CH_3$ | $CH_3$ | O | 2 | H | H | $nC_4H_9$ |

| | S | | | A | | | | | | H | | |
|---|---|---|---|---|---|---|---|---|---|---|---|---|
| | Formel I | | | Formel II | | | | | | Formel III | | |
| Bsp. | $R^1$ | $R^2$ | A | $R^3$ | $R^4$ | $R^5$ | $R^6$ | B | n | $R^7$ | $R^8$ | $R^9$ |
| 8 | H | H | X[a)] | H | $CH_3$ | $CH_3$ | $CH_3$ | NH | 3 | H | H | $C_2H_5$ |
| 9 | H | $CH_3$ | OH | H | $CH_3$ | $CH_3$ | $CH_3$ | O | 2 | H | $CH_3$ | $CH_3$ |
| 10 | H | H | X[a)] | H | $CH_3$ | $CH_3$ | $CH_3$ | O | 2 | H | H | $C_2H_5$ |
| 11 | H | H | X[a)] | H | $CH_3$ | $CH_3$ | $CH_3$ | O | 2 | H | $CH_3$ | $CH_3$ |
| 12 | H | H | OH | H | H | $CH_3$ | $CH_3$ | O | 5 | H | H | $C_2H_5$ |
| 13 | H | H | OH | H | $CH_3$ | $CH_3$ | $CH_3$ | O | 2 | H | $CH_3$ | $CH_3$ |

Anmerkungen: a) $X \triangleq NH-C-(CH_3)_2CH_2-SO_3H$

*Tabelle 2*

Eingesetzte Monomeren-Mengen der Beispiele 1 bis 13

| Bsp. | S-Monomeres (g) | (mol) | A-Monomeres (g) | (mol) | H-Monomeres (g) | (mol) | S:A | H:(A+S) |
|---|---|---|---|---|---|---|---|---|
| 1 | 43,8 | 0,61 | 95,4 | 0,61 | 60,8 | 0,61 | 1:1 | 1:2 |
| 2 | 43,8 | 0,61 | 95,4 | 0,61 | 60,8 | 0,61 | 1:1 | 1:2 |
| 3 | 40,3 | 0,56 | 103,6 | 0,56 | 56,0 | 0,56 | 1:1 | 1:2 |
| 4 | 48,3 | 0,56 | 95,5 | 0,56 | 56,2 | 0,56 | 1:1 | 1:2 |
| 5 | 33,6 | 0,47 | 73,2 | 0,47 | 93,2 | 0,93 | 1:1 | 2:2 |
| 6 | 54,9 | 0,76 | 119,7 | 0,76 | 25,4 | 0,25 | 3:3 | 1:6 |
| 7 | 49,1 | 0,68 | 107,2 | 0,68 | 43,7 | 0,34 | 2:2 | 1:4 |
| 8 | 100,9 | 0,49 | 82,9 | 0,49 | 16,2 | 0,16 | 3:3 | 1:6 |
| 9 | 50,1 | 0,58 | 91,5 | 0,58 | 58,3 | 0,58 | 1:1 | 1:2 |
| 10 | 89,2 | 0,43 | 67,7 | 0,43 | 43,1 | 0,43 | 1:1 | 1:2 |
| 11 | 89,2 | 0,43 | 67,7 | 0,43 | 43,1 | 0,43 | 1:1 | 1:2 |
| 12 | 40,3 | 0,56 | 103,6 | 0,56 | 56,0 | 0,56 | 1:1 | 1:2 |
| 13 | 71,8 | 1,00 | 78,3 | 0,50 | 49,9 | 0,50 | 2:1 | 1:3 |

*Tabelle 3*

Prüfung auf Entklebungs- und Koagulierungseigenschaften in neutralem Leitungswasser (Einsatzkonzentration des polymeren Wirkstoffs: 50 ppm; Lackkonzentration: 2000 ppm).

| Bsp. | Entklebung d. Lacks[a)] | Koagulation [b)] |
|---|---|---|
| 1 | 1 | 1 |
| 2 | 1 | 1 |
| 3 | 2 | 1 |
| 4 | 2 | 1 |
| 5 | 2 | 1 |
| 6 | 1 | 2 |
| 7 | 2 | 2 |
| 8 | 1 | 1 |
| 9 | 2 | 1 |
| 10 | 2 | 2 |
| 11 | 2 | 1 |
| 12 | 2 | 2 |
| 13 | 2 | 2 |

Anmerkungen:
a) Bewertung: 1 vollständige Entklebung
2 befriedigende Entklebung
3 schlechte Entklebung
b) Bewertung: 1 vollständige Koagulation
2 befriedigende Koagulation
3 schlechte Koagulation

**Patentansprüche**

1. Mittel zur Koagulierung von Lacken, Wachsen und Beschichtungsmitteln, enthaltend wasserlösliche Copolymere aus

a) Säuregruppen tragenden Monomeren («S-Monomeren») der allgemeinen Formel I

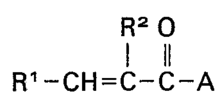

(I)

in der
$R^1$ und $R^2$ gleich oder verschieden sein können und für Wasserstoff oder lineare oder verzweigte Alkylreste mit 1 bis 3 C-Atomen stehen, und
A ein Hydroxy-Rest oder Iminoalkansulfonsäure-Rest sein kann, in dem die Alkylen-Gruppe verzweigt oder unverzweigt sein und 1 bis 6 C-Atome tragen kann, und

b) Aminogruppen tragenden Monomeren («A-Monomeren») der allgemeinen Formel II

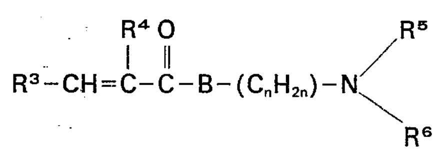

(II)

in der $R^3$ und $R^4$ gleich oder verschieden sein können und für Wasserstoff oder lineare oder verzweigte Alkylreste mit 1 bis 3 C-Atomen stehen, und

$R^5$ und $R^6$ gleich oder verschieden sein können und für Alkylreste mit 1 oder 2 C-Atomen stehen,

B Sauerstoff oder eine $-NH-$ Gruppe ist, der durch $(C_nH_{2n})$ gekennzeichnete Alkylenrest linear oder verzweigt sein kann und n eine ganze Zahl von 1 bis 6 ist, und

c) hydrophobierend wirkenden Monomeren («H-Monomeren») der allgemeinen Formel III

$$R^7-CH=\overset{\overset{\displaystyle R^8}{|}}{C}-\overset{\overset{\displaystyle O}{\|}}{C}-OR^9 \qquad (III)$$

in der

$R^7$ und $R^8$ gleich oder verschieden sein können und für Wasserstoff oder lineare oder verzweigte Alkylreste mit 1 bis 3 C-Atomen stehen,

$R^9$ ein linearer oder verzweigter Alkylrest mit 1 bis 6 C-Atomen ist, oder Styrol,

wobei das Molverhältnis der S-Monomeren und A-Monomeren zueinander im Bereich von 2:1 bis 1:2 liegt und das Molverhältnis der H-Monomeren zur Summe der beiden anderen Monomeren grösser oder gleich 1:20 ist.

2. Koagulierungsmittel nach Anspruch 1, dadurch gekennzeichnet, dass sie als S-Monomere Acrylsäure, Methacrylsäure oder Acrylamidomethylpropansulfonsäure enthalten.

3. Koagulierungsmittel nach Anspruch 1, dadurch gekennzeichnet, dass sie als A-Monomere Dimethylaminoethylmethacrylate, Dimethylaminoneopentylacrylat oder Dimethylaminopropylmethacrylamid enthalten.

4. Koagulierungsmittel nach Anspruch 1, dadurch gekennzeichnet, dass sie als H-Monomere Ester der Acrylsäure oder Methacrylsäure von linearen oder verzweigten Alkoholen mit 1 bis 4 C-Atomen enthalten.

5. Koagulierungsmittel nach Ansprüchen 1 bis 4, dadurch gekennzeichnet, dass sie

als S-Monomere Acrylsäure, Methacrylsäure oder Acrylamidomethylpropansulfonsäure,

als A-Monomere Dimethylaminoethylmethacrylat, Dimethylaminoneopentylacrylat oder Dimethylaminopropylmethacrylamid und

als H-Monomere $C_1$- bis $C_4$-Ester der Acrylsäure oder Methacrylsäure enthalten.

6. Koagulierungsmittel nach Ansprüchen 1 bis 5, dadurch gekennzeichnet, dass sie Copolymere enthalten, in denen das Molverhältnis der S-Monomeren zu den A-Monomeren 1,2:1 bis 1:1,2, bevorzugt 1:1 ist.

7. Koagulierungsmittel nach Ansprüchen 1 bis 6, dadurch gekennzeichnet, dass sie Copolymere enthalten, in denen das Molverhältnis der H-Monomeren zur Summe der S- und A-Monomeren grösser oder gleich 1:10 ist.

8. Koagulierungsmittel nach Ansprüchen 1 bis 7, dadurch gekennzeichnet, dass sie in bevorzugt neutralen wässerigen Koagulierungsbädern in Einsatzkonzentrationen von 0,01 bis 100 ppm, bevorzugt von 0,05 bis 50 ppm, besonders bevorzugt von 0,1 bis 20 ppm in neutralem Leitungswasser enthalten sind.

## Claims

1. Coagulating agents for lacquers, waxes and coating compositions, containing water-soluble copolymers of

a) monomers containing acid groups ("S-monomers") corresponding to the following general formula

$$R^1-CH=\overset{\overset{\displaystyle R^2}{|}}{C}-\overset{\overset{\displaystyle O}{\|}}{C}-A \qquad (I)$$

in which

$R^1$ and $R^2$, which may be the same or different, represent hydrogen or linear or branched $C_1$-$C_3$ alkyl groups and

A may be a hydroxy radical or an iminoalkane sulfonic acid residue, in which the alkylene group may be branched or unbranched and may contain from 1 to 6 carbon atoms, and

b) monomers containing amino groups ("A-monomers") corresponding to the following general formula

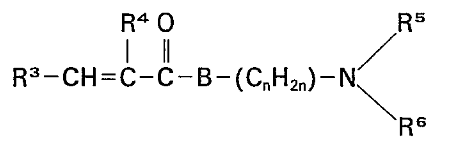
(II)

in which

$R^3$ and $R^4$, which may be the same or different, represent hydrogen or linear or branched $C_1$-$C_3$ alkyl groups and

$R^5$ and $R^6$, which may be the same or different, represent $C_1$ or $C_2$ alkyl groups,

B is oxygen or an $-NH-$ group, the alkylene radical characterized by $(C_nH_{2n})$ may be linear or branched and

n is an integer of from 1 to 6, and

c) hydrophobicizing monomers ("H-monomers") corresponding to the following general formula

$$R^7-CH=\overset{\overset{\displaystyle R^8}{|}}{C}-\overset{\overset{\displaystyle O}{\|}}{C}-OR^9 \qquad (III)$$

in which

$R^7$ and $R^8$, which may be the same or different, represent hydrogen or linear or branched $C_1$-$C_3$ alkyl groups and

$R^9$ is a linear or branched $C_1$-$C_6$ alkyl group, or styrene, the molar ratio of the S-monomers and A-monomers to one another being from 2:1 to 1:2 and the molar ratio of the H-monomers to the sum of the other two monomers being greater than or equal to 1:20.

2. Coagulating agents as claimed in Claim 1, characterized in that they contain acrylic acid,

methacrylic acid or acrylamidomethyl propane sulfonic acid as S-monomer.

3. Coagulating agents as claimed in Claim 1, characterized in that they contain dimethylaminoethyl methacrylate, dimethylaminoneopentyl acrylate or dimethylaminopropyl methacrylamide as A-monomer.

4. Coagulating agents as claimed in Claim 1, characterized in that they contain esters of acrylic acid or methacrylic acid of linear or branched $C_1$-$C_4$ alcohols as H-monomer.

5. Coagulating agents as claimed in Claims 1 to 4, characterized in that they contain
acrylic acid, methacrylic acid or acrylamidomethyl propane sulfonic acid as S-monomer,
dimethylaminoethyl methacrylate, dimethylaminoneopentyl acrylate or dimethylaminopropyl methacrylamide as A-monomer and
$C_1$-$C_4$ esters of acrylic acid or methacrylic acid as H-monomer.

6. Coagulating agents as claimed in Claims 1 to 5, characterized in that they contain copolymers in which the molar ratio of the S-monomer to the A-monomer is from 1.2:1 to 1:1.2 and preferably 1:1.

7. Coagulating agents as claimed in Claims 1 to 6, characterized in that they contain copolymers in which the molar ratio of the H-monomer to the sum of the S- and A-monomers is greater than or equal to 1:10.

8. Coagulating agents as claimed in Claims 1 to 7, characterized in that they are present in preferably neutral aqueous coagulating baths in concentrations of from 0.01 to 100 ppm, preferably from 0.05 to 50 ppm and more preferably from 0.1 to 20 ppm in neutral tapwater.

**Revendications**

1. Agents de coagulation de vernis, cires et agents d'enduction, contenant des copolymères solubles dans l'eau

a) de monomères porteurs de groupes acides («monomères S») de formule générale (I)

$$R^1-CH=\overset{\overset{\displaystyle R^2}{|}}{C}-\overset{\overset{\displaystyle O}{\|}}{C}-A \qquad (I)$$

dans laquelle

$R^1$ et $R^2$ peuvent être identiques ou différents et représentent de l'hydrogène ou des radicaux alcoyle linéaires ou ramifiés ayant 1 à 3 atomes de carbones et

A peut être un radical hydroxy ou un radical acide iminoalcane-sulfonique dans lequel le groupe alcoylène peut être ramifié ou non ramifié et porter 1 à 6 atomes de carbone, et

b) de monomères porteurs de groupes amino («monomères A») de formule générale (II)

$$R^3-CH=\overset{\overset{\displaystyle R^4}{|}}{C}-\overset{\overset{\displaystyle O}{\|}}{C}-B-(C_nH_{2n})-N\begin{matrix} \diagup R^5 \\ \diagdown R^6 \end{matrix} \qquad (II)$$

dans laquelle

$R^3$ et $R^4$ peuvent être identiques ou différents et représentent de l'hydrogène ou des radicaux alcoyle linéaires ou ramifiés ayant 1 à 3 atomes de carbone, et

$R^5$ et $R^6$ peuvent être identiques ou différents et représentent des radicaux alcoyle ayant 1 ou 2 atomes de carbone,

B est de l'oxygène ou un groupe $-NH-$, le radical alcoylène désigné par $(C_nH_{2n})$ pouvant être linéaire ou ramifié et n étant un nombre entier de 1 à 6, et

c) de monomères à action hydrofugeante («monomères H») de formule générale (III)

$$R^7-CH=\overset{\overset{\displaystyle R^8}{|}}{C}-\overset{\overset{\displaystyle O}{\|}}{C}-OR^9 \qquad (III)$$

dans laquelle

$R^7$ et $R^8$ peuvent être identiques ou différents et représentent de l'hydrogène ou des radicaux alcoyle linéaires ou ramifiés ayant 1 à 3 atomes de carbone,

$R^9$ est un radical alcoyle linéaire ou ramifié ayant 1 à 6 atomes de carbone, ou du styrène,
le rapport molaire des monomères S et des monomères A entre eux se situant dans l'intervalle de 2:1 à 1:2 et le rapport molaire des monomères H envers la somme des deux autres monomères étant supérieur ou égal à 1:20.

2. Agents de coagulation selon la revendication 1, caractérisés en ce qu'ils contiennent comme monomères S de l'acide acrylique, de l'acide méthacrylique ou de l'acide acrylamidométhylpropanesulfonique.

3. Agents de coagulation selon la revendication 1, caractérisés en ce qu'ils contiennent comme monomères A du méthacrylate de diméthylaminoéthyle, de l'acrylate de diméthylaminonéopentyle ou de la diméthylaminopropylméthacrylamide.

4. Agents de coagulation selon la revendication 1, caractérisés en ce qu'ils contiennent comme monomères H des esters d'acide acrylique ou d'acide méthacrylique d'alcools linéaires ou ramifiés ayant 1 à 4 atomes de carbone.

5. Agents de coagulation selon les revendications 1 à 4, caractérisés en ce qu'ils contiennent
comme monomères S de l'acide acrylique, de l'acide méthacrylique ou de l'acide acrylamidométhylpropanesulfonique,
comme monomères A du méthacrylate de diméthylaminoéthyle, de l'acrylate de diméthylaminonéopentyle ou de la diméthylaminopropylméthacrylamide et comme monomères H des esters en $C_1$ à $C_4$ de l'acide acrylique ou de l'acide méthacrylique.

6. Agents de coagulation selon les revendications 1 à 5, caractérisés en ce qu'ils contiennent des copolymères dans lesquels le rapport molaire des monomères S envers les monomères A est de 1,2:1 à 1:1,2, de préférence de 1:1.

7. Agents de coagulation selon les revendications 1 à 6, caractérisés en ce qu'ils contiennent

des copolymères dans lesquels le rapport molaire des monomères H envers la somme des monomères S et A est supérieur ou égal à 1:10.

8. Agents de coagulation selon les revendications 1 à 7, caractérisés en ce qu'ils sont contenus dans des bains de coagulation aqueux de préférence neutres à des concentrations d'utilisation de 0,01 à 100 ppm, de préférence de 0,05 à 50 ppm, tout spécialement de 0,1 à 20 ppm dans de l'eau de distribution neutre.